# EUROPEAN PATENT APPLICATION

(11) **EP 1 270 453 A1**
(43) Date of publication of application: **02.01.2003**
(21) Application number: 02380134.3
(22) Date of filing: 27.06.2002
(51) Int. Cl.: B65G 1/14

(54) **Support for transport and/or storage of shaped parts**

(30) Priority: 29.06.2001 ES 200101514
(71) Applicant: Siscont Sistemas, S.L., 31007 Pamplona (Navarra) (ES)
(72) Inventor: Beroiz Zenoz, Pedro, 31007 Pamplona (Navarra) (ES)
(74) Representative: Davila Baz, Angel

(57) **Abstract**

Support for transport and/or storage of shaped parts, comprising a flat chassis in the form of a quadrangular frame that is provided on two of its parallel sides (1 and 2) with transverse slots (3 and 4) in which are mounted two opposing sets of pallets (5 and 6) that are crossed perpendicularly by shafts (17, 18) which run on the inside of the sides (1 and 2), with said pallets capable of swivelling between a retracted position (5, 6) and an extracted position (5', 6'). Each pair of opposing pallets is connected by a rod (19). The pallets (5) of one set project out of the anterior surface of the corresponding side in a portion (22) that in the extracted position (22') defines a support for the parts to be transported.

## Description

The present invention relates to a support for transport and/or storage of shaped parts, particularly parts that are long and wide with respect to their thickness, such as metal plate parts obtained, for example, by dieing, plastic parts obtained by moulding, etc.

As an example of shaped parts can be mentioned components of automobile bodies made of metal plate or plastic, which are obtained by dieing in the former case and moulding in the latter. These parts are usually fitted for transport and storage between two or more parallel supports, where they remain until their assembly in the vehicle body. These supports are usually configured to hold and transport a large number of parts placed parallel and near each other.

Traditional supports made for this purpose are generally designed as columns provided with a number of swivelling pallets arranged in successive levels. These pallets are near each other and must be connected to each other by a mechanism for successive swivelling that is in charge of propelling each pallet successively to an active position when the previous pallet has ended its run towards said position and has received a part to support it. In this way, these columns have a relatively complex construction and, more importantly, a highly costly one.

The object of the present invention is to solve the aforementioned drawbacks by means of a support that has a simple construction and a low cost, and that in addition allows it to be positioned to receive the parts both horizontally and vertically.

The support of the invention has no complex mechanisms, with its simplicity being its main characteristic.

In accordance with the present invention, the support is comprised of a flat chassis in the form of a square or rectangular frame, with its sides made from metal profiles, preferably with open sections. Two parallel sides of the frame are provided with transverse slots on which are mounted two sets of independent flat pallets, one on either side, with the pallets on each side placed opposite each other. The pallets also extend slightly beyond the lateral surface of the profiles that define the two sides.

The two sets of pallets are connected to the side of the frame on which they are mounted by rotation shafts or pivots for swivelling between a retracted and an extracted position, in which at least the pallets of one set define a support for the parts to be transported. The slots on which the pallets are mounted are wide enough to accept the corresponding shaft but not to allow a sideways motion of the pallets, so that they act as guides for said pallets.

At least one of the sets of pallets is crossed perpendicularly by a rod that acts on the inside of the exposed side of said pallets. The other set can be similarly crossed by another rotation shaft or it can rest on a swivelling pivot defined by the profile of the corresponding edge of the frame.

According to another characteristic of the invention, each pair of opposing pallets is connected by a rod, hinged on its ends to said pallets, that acts as a connecting rod to transmit the swivelling motion.

The pallets that act as supports for the parts to be transported extend out of the anterior surface of the side on which they are mounted by a portion that can be provided with a perpendicular extension, which, in the extracted position of the pallet, defines the support for the part to be transported or stored.

According to an example of an embodiment, the pallets provided with this support for the parts to be transported have an approximately C-shaped outline, with one of the side segments provided with the extension that defines the aforementioned support and with an orifice through which passes the rotation shaft. The pallets mounted on the opposite side of the frame, which lack the aforementioned support, have an L-shaped outline and are provided, near their free transverse edge of one segment, with two orifices, an internal one to allow the rotation shaft to pass and an external one for articulation of the connecting rod. As regards the profile that defines the side of the frame on which the pallets with supports are established, it has a C-section with straight segments and with the lateral segments slightly converging. Through the central segment of this profile extends the side segment of the pallet that includes the support for the parts to be transported, while the other side segment of the pallet extends through the side segment of the profile that faces into the frame, in order to be connected with the connecting rod. In this C-profile the outer lateral segment is provided with intermediate slits that define tongues which bend towards the inside of the profile and that are provided with an orifice, aligned for all the tabs, meant to allow assembling the corresponding rotation shaft. Lastly, the profile of the parallel side on which are mounted the pallets without the support for the parts to be transported has a crankled section with three consecutive segments and two right angles in opposite senses, with one of the end segments having intermediate slits that define tongues which bend backwards and that are provided with an orifice, which orifices are placed opposite each other in all the tongues to allow assembling the corresponding rotation shaft. The other two segments of the profile have slots to allow the pallets to pass.

The pallets lacking the support for the parts to be transported can be acted upon to cause the displacement of the pallets with supports form the inoperative or retracted position to the active or extracted position in which they define the support.

The connecting rods that connect each pair of opposite pallets are provided on their ends with elbows that define corresponding end segments perpendicular to the rod and meant to insert in the articulation orifice of the pallets. This segment of the rods is prevented from moving with respect to the pallet by a locking clip.

The above-described characteristics and other specific to the invention, as described in the claims, are described in what follows in greater detail with the aid of the accompanying drawings, which show a non-limiting example of an embodiment.

In the drawings:
Figure 1 is a front perspective partial view of a support constructed according to the invention, shown in a section along the direction parallel to the swivelling of the pallets.
Figure 2 is a rear perspective view of the support of figure 1.
Figure 3 is a section of the support along the line III-III of figure 1.
Figure 4 is a similar section to figure 3, along the line IV-IV of figure 1.
Figure 5 is a perspective exploded view of two of the opposite pallets and the connecting rod between them.
Figures 6 and 7 are partial rear perspective views of the profiles that determine the sides of the frame on which the pallets are mounted.
Figure 8 is a perspective view of one of the clips that attach the rods to the pallets.
Figure 9 shows a perspective view of a spring configured for assembly in one of the rotation shafts of the pallets.
Figures 10, 11 and 12 are views similar to figure 4, each showing an alternative embodiment.

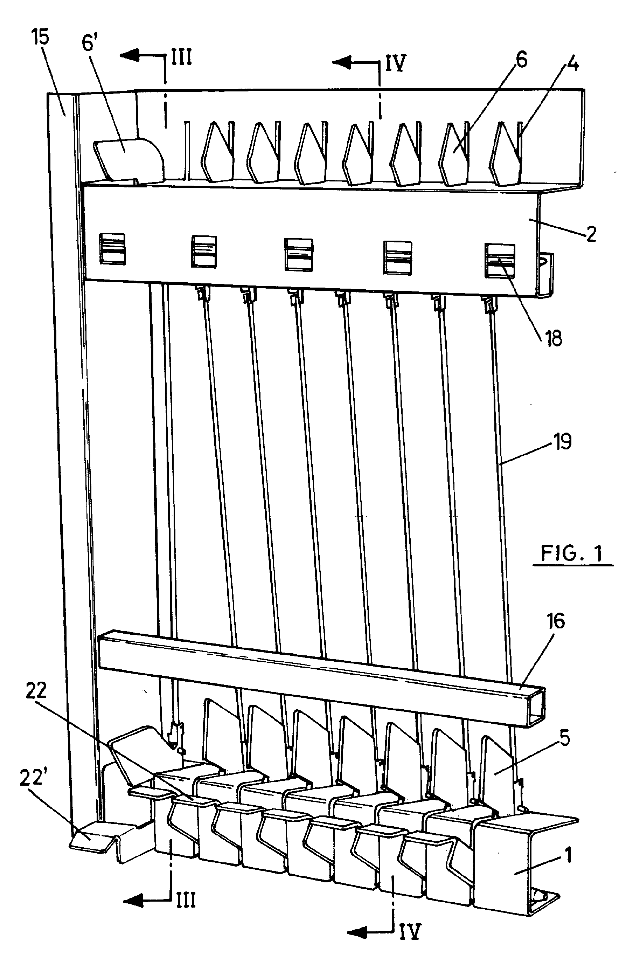

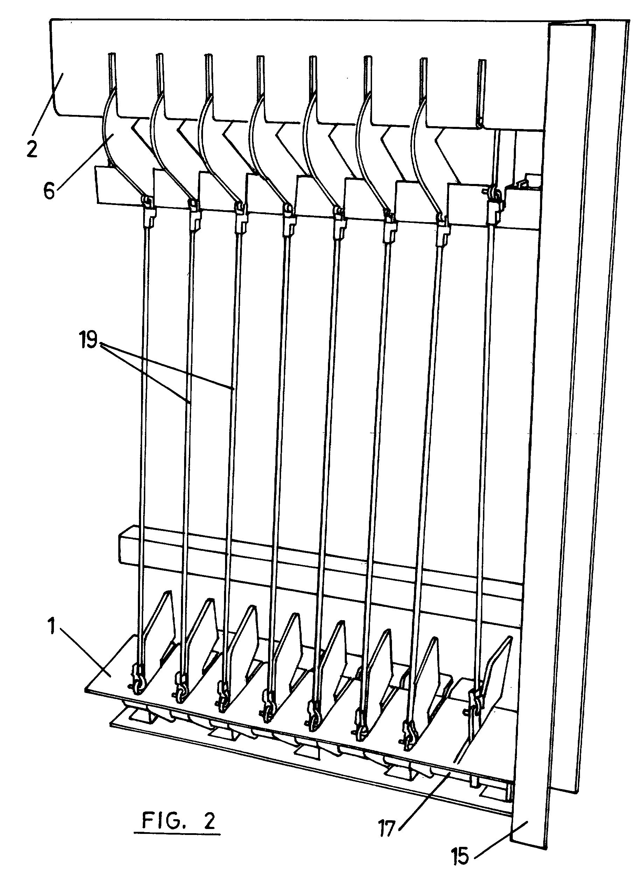

As shown in figures 1 and 2, the support of the invention comprises a flat chassis in the form of a square or rectangular frame, with its sides formed by metal profiles, preferably with an open section. Two of these parallel sides, labelled 1 and 2, are provided on their walls with transverse slots 3 and 4, through which are mounted the pallets 5 and 6 which are placed on both profiles in coplanar positions opposing each other by pairs.

The profile 1, as can be better seen in figure 7, has a C-shaped section with straight segments, the side segments converging slightly. One of these side segments has intermediate slits that define tongues 7, which bend inwards and are provided with an orifice 8, all of which orifices are placed opposite each other. The other two segments of the profile are crossed by the slots 3.

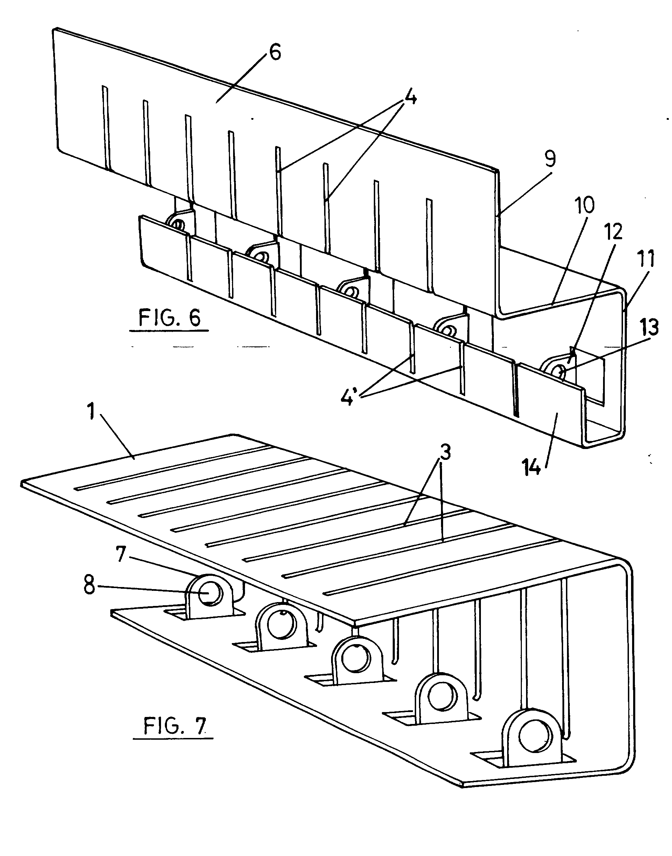

The profile 2, as can be better seen in figure 6, has a crankled section with three consecutive straight segments labelled 9, 10 and 11, separated by two right angles in different senses. The intermediate segment 11 is also provided with intermediate slits that define tongues 12 provided with an orifice 13, so that these orifices are opposite each other in all the tongues 12. The segments 9 and 10 are crossed by the slits 4. The end segment 11 extends in a portion 14 with a double right-angle elbow in order to define an end position parallel to the segment 11, which is also provided with transverse slots 4' aligned with the slots 4.

The frame that defines the support chassis is completed by another two profiles 15, having for example a C-section, of which only one is shown in figures 1 and 2, such that these profiles can be connected by a rod 16.

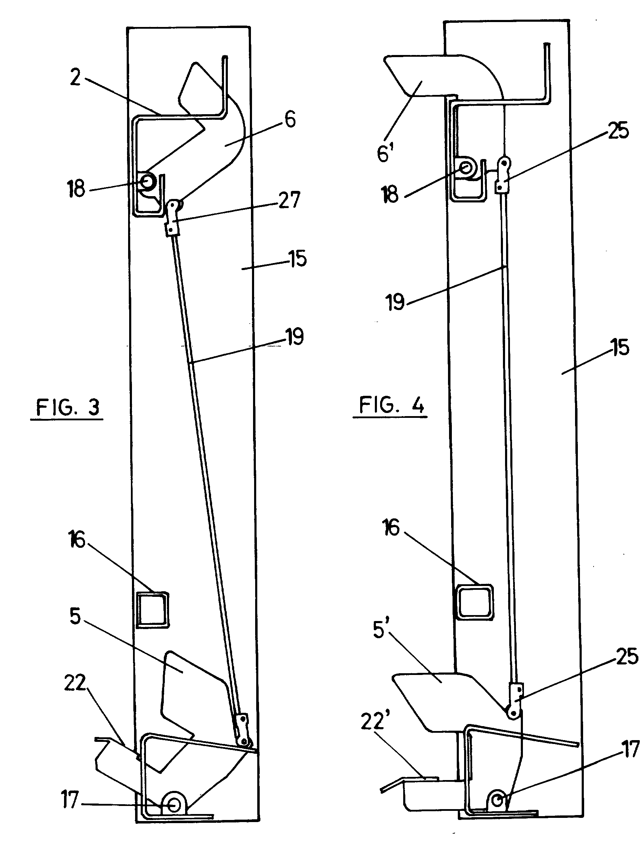

The pallets 5 mounted on the profile 1 are perpendicularly crossed by a shaft 17, as can be appreciated in figures 3 and 4, about which they are free to swivel. Likewise, the pallets 6 mounted on the profile 2 are perpendicularly crossed by a shaft 18 about which they are also free to swivel.

Each pair of opposite or coplanar pallets 5 and 6 are related by a rod 19.

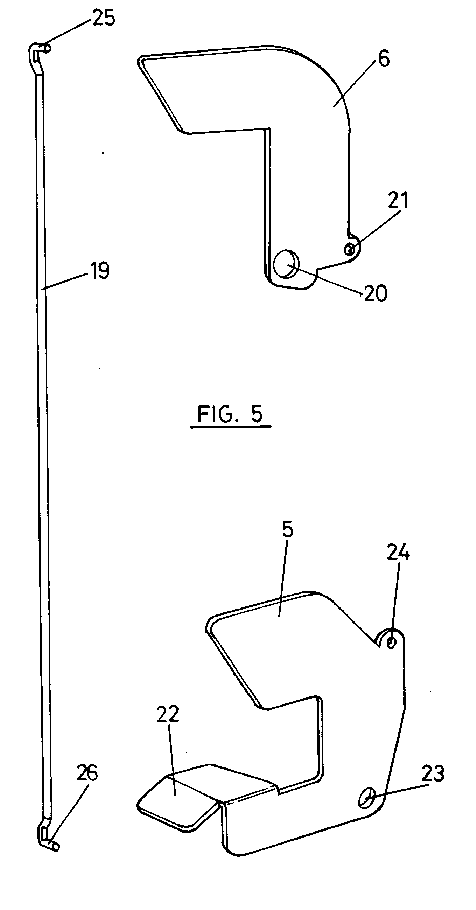

As can be better seen in figure 5, the pallets 6 are flat and have an L-shaped outline, and are provided near their free transverse end of one of their segments with two orifices 20 and 21. The pallets 5, on their part, are also flat and have a C-shaped outline, and are provided on one of their lateral segments with a perpendicular projection 22 and an orifice 23, approximately at the vertex with the central segment. On the opposite side of said central segment it is provided with an orifice 24.

As can be seen also in figure 5, the rod 19 is provided on its ends with elbows that define the segments 25 and 26 perpendicular to said rod. The segment 25 is meant to be inserted in the orifice 21 of pallet 6, while the segment 26 is meant to be inserted in the orifice 24 of the pallet 5. The rotation shafts 18 and 17 pass respectively through the orifices 20 and 23 of the pallets 6 and 5.

With the described construction the pallets 5 and 6 can swivel about the shafts 17 and 18 between a retracted position, labelled 5 and 6 in figures 1, 2 and 3, and an extracted position labelled 5' and 6' in figures 1 and 4. From the retracted position the pallets can pass to the extracted position pushing the pallets 6 to the position 6' and transmitting the swivelling motion to the pallet 5 through the rod 19.

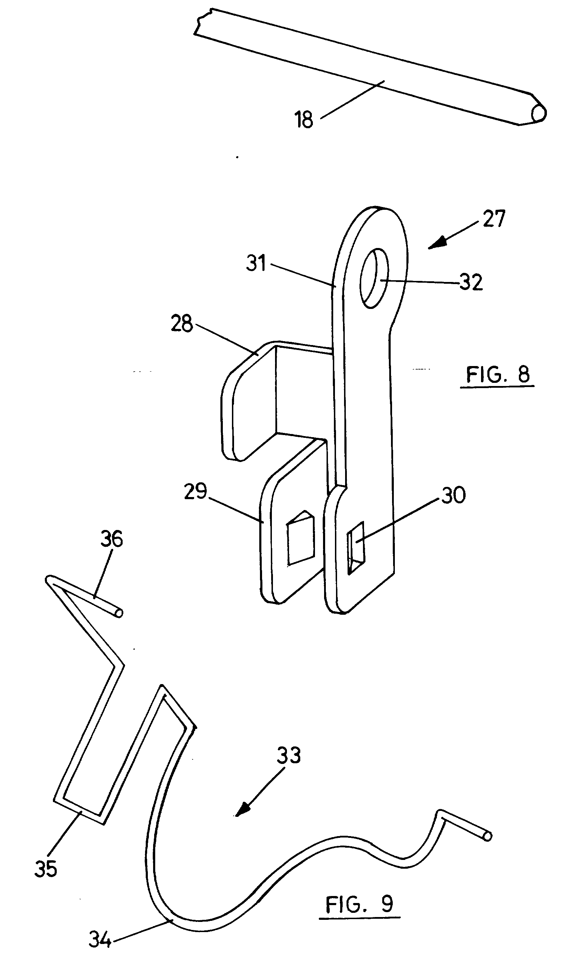

When the pallets 5 are in the extracted position 5' the widening 22 of said pallets is in the position labelled 22', in which it defines a support for the part to be transported. As the pallets 5 swivel towards the extracted position and receive the part to be transported the remaining pallets will successively swivel as well, acting on the corresponding pallet 6.
In order to prevent the rods 19 from being accidentally released from the pallets they connect, their ends are connected to said pallets by locking clips 27 which, as can be better seen in figure 8, have a grooved configuration with two segments 28 and 29 having different widths, the first meant to embrace the elbowed segment together with the corresponding pallet, and the second meant to embrace the rod, so that the walls of this second segment may have recesses 30 to secure its assembly. The segments 28 and 29 are limited on one side by an extended wall labelled 31 and that is provided with an orifice 32 meant to receive the end segment 25 or 26 of the rod 19.

In addition, on the rotation shaft 17 of the pallets 5 can be mounted a spring 33, figure 9, that is provided with an arched segment 34 to embrace the shaft, as well as a clip 35 that will embrace the pallet from behind and an end segment 36 on which the rear edge of said pallet will rest.

The pallets 5 may be made in a single piece, as shown in figure 5, or be made from two pieces.

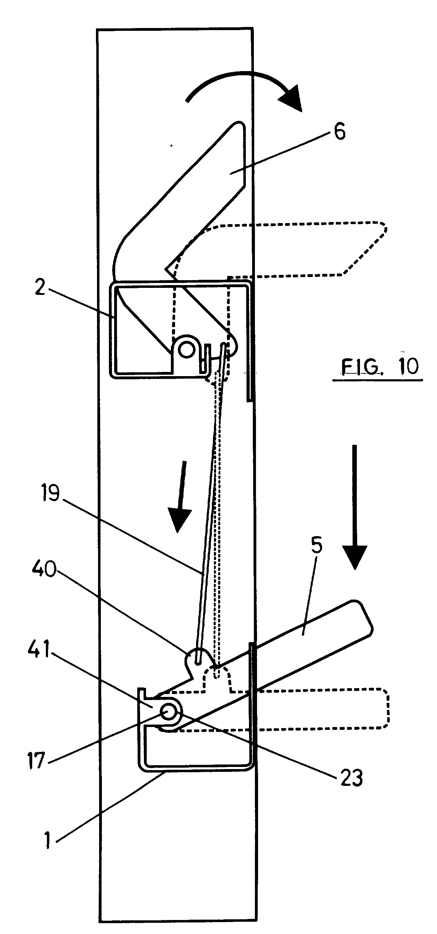

Figure 10 shows an alternative embodiment, in which the pallets 5, which have the support for the parts to be transported and/or stored, consist of a plate with an approximately rectangular outline, having an orifice 23 to allow the rotation shaft 17 to pass. From the top edge of said plate extends a tab 40 provided with an orifice for attaching the connecting rod 19. The top pallet 6 is similar to the one in the previously described embodiment.

Figure 10 shows the pallets in a retracted and operational position by a solid and broken line.

The profile 1 on which said pallets are mounted has a C-shaped outline, so that from one of its segments project internal tabs 41 having an orifice, aligned in all the tabs, to allow the shaft 17 to pass. The opposite segment, which is longer, is provided with the slots through which projects the pallet 5.

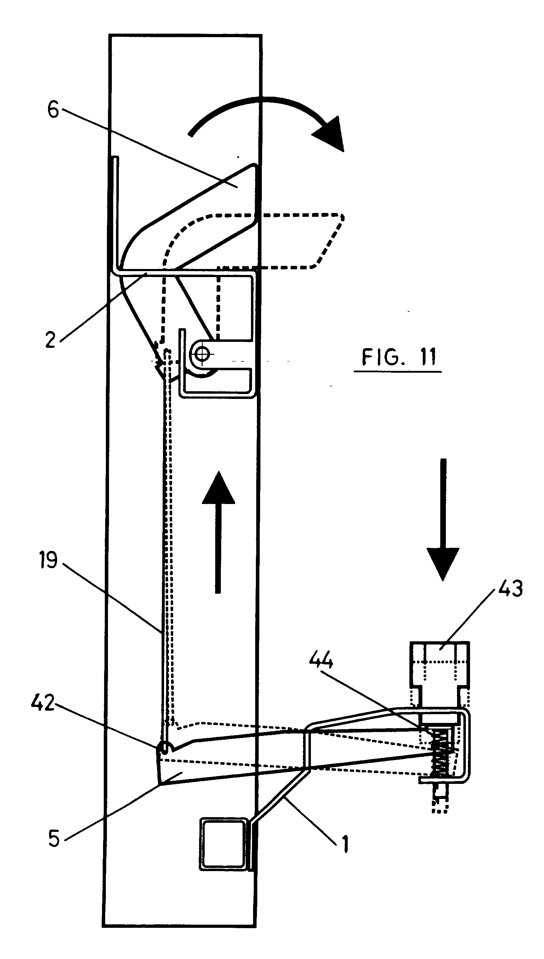

Figure 11 shows, also in retracted and an operational position, a third alternative embodiment in which the pallet 5 consists of a plate with a similar outline as in the embodiment of figure 10, but which rests on the lower edge of the slot of the profile 1 through which it projects out, and is hinged on a point 42 near its transverse edge to the connecting rod 19, while near its outer transverse edge it is provided with an upper head 43 that defines a support for the parts to be transported or stored. The pallet 5 can thus swivel about the lower edge of the slot of the profile 1, between an upper position shown in a solid line and a lower support position shown in a broken line, being pushed towards the upper position by a spring 44.

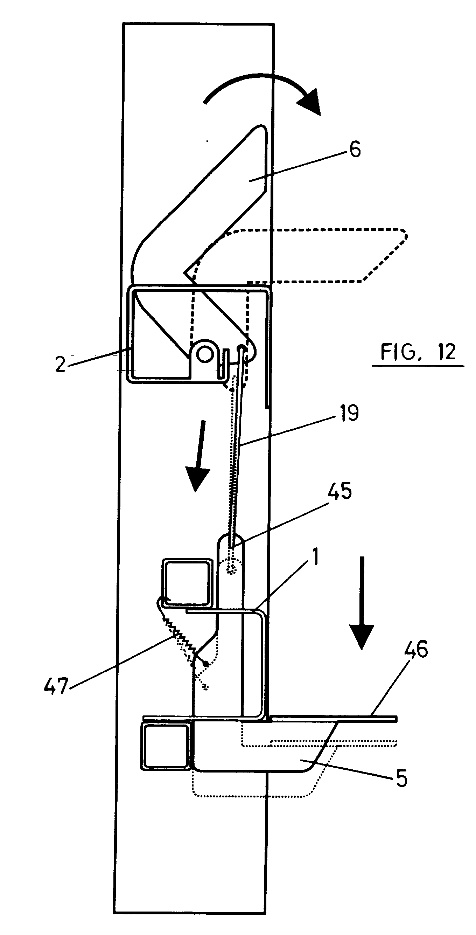

Lastly, figure 12 shows an embodiment also with the pallets in retracted and operational positions wherein the lower pallet 5 consists of an L-shaped plate and is hung through the top end 45 of one of its segments from the connecting rod 19. In this case the C-section profile 1 is perpendicularly crossed through the slots of its lateral segments by the suspension segment of the pallet. The other segment of the pallet has a lateral extension 46 that defines the support for the piece to be transported. The pallets can move between a top position, shown by a solid line, and a lower or operational position, shown by a broken line, with said pallets being pushed toward the top position by a spring 47.

In the embodiments of figures 11 and 12 the profile 1 is attached between the frame elements by one or two tubular profiles.

As for the rest, the construction and operation of the embodiments of figures 10 to 12 is the same as described with reference to figures 1 to 9.

## Claims

1. Support for transport and/or storage of shaped parts, **characterised in that** it consists of a flat chassis in the form of a quadrangular frame with right angles, formed by profiles, with two parallel sides of said frame having transverse slots through which are mounted two sets of independent opposing flat pallets that partially project out of said sides, and that are connected to said sides by shafts or pivots that allow the pallets to swivel from a retracted position to an extracted position; with each pair of opposing pallets connected by a rod that is hinged on its ends to said pallets in order to transmit the swivelling motion between them; with the pallets of at least one set projecting out of the anterior surface of the side on which they are mounted by an amount that, in the extracted position of the pallet, defines a support for the parts to be transported and/or stored.

2. Support according to claim 1, **characterised in that** the pallets that define the support for the parts to be transported and/or stored have an approximately C-shaped outline, with one of the lateral segments being provided with an extension that defines the aforementioned support, as well as being provided with an orifice to allow the rotation shaft to pass, which is placed near the vertex defined between the lateral segment and the central segment, while the pallets lacking the aforementioned support have an L-shaped outline and are provided near the transverse free edge of one of the segments with two orifices, an inner one to allow the rotation shaft to pass and an outer one to allow the articulation to the connecting rod.

3. Support according to claim 1, **characterised in that** the profile that forms the side of the frame in which are mounted the pallets with the aforementioned support has a C-shaped section and straight segments, with the lateral segments converging slightly, and with the lateral segment of the pallet including the aforementioned support projecting out through the central segment of this profile, while the other lateral segment of said pallet projects out through the lateral segment of the profile that is directed towards the inside of the frame, in order to receive the attachment to the connecting rod.

4. Support according to claim 3, **characterised in that** the external lateral segment of the C-profile has intermediate slits that define tongues which bend towards the inside of the profile and that are provided with an orifice, aligned in all the tabs, for assembling the corresponding rotation shaft.

5. Support according to claim 1, **characterised in that** the profile that defines the side of the frame on which are mounted the pallets without the aforementioned support has a crankled section with three consecutive segments and two right angles in opposite senses, with one of the end segments having intermediate slits that define tongues which bend backwards and that are provided with an orifice, with the orifices opposite each other in the tongues to allow assembling the corresponding rotation shaft; while the other two segments of the profile have slots to allow the pallets to pass.

6. Support according to claim 1, **characterised in that** the connecting rods are provided on their ends with elbows that define corresponding end segments perpendicular to the rod, meant to be inserted in the articulation orifice of the pallets, with this segment of the rods being prevented from moving with respect to the pallet by a locking clip.

7. Support according to claim 1, **characterised in that** the pallets with the support for the parts to be transported and/or stored consist of a plate with an approximately rectangular outline, with an orifice near one of the transverse edges to allow the rotation shaft to pass, and an upper tongue near said transverse edge with an orifice for attaching the connecting rod; and **in that** the profile on which these pallets are mounted has a C-shaped outline, with inner tabs projecting out of one of its segments having an orifice, aligned in all said tabs to allow the corresponding rotation shaft to pass, while the other segment is longer and is provided with transverse slots through which the aforementioned pallets project out.

8. Support according to claim 1, **characterised in that** the pallet provided with the aforementioned support consists of a plate with an approximately rectangular outline that rests on the lower edge of the slot of the lower profile of the frame, and is hinged at a point near its inner transverse edge to the connecting rod, while near its outer edge it is provided with an upper head that defines the aforementioned support, with said plate capable of swivelling about the lower edge of the slot through which it passes from a top position to a bottom support position, being pushed toward the top position by a spring.

9. Support according to claim 1, **characterised in that** the pallet provided with the aforementioned support consists of an plate with an L-shaped outline that hangs by the end of one of its segments from the connecting rod, and **in that** the profile of the frame on which said pallet is mounted has a C-shaped section, with the pallet segment that connects to the connecting rod passing perpendicularly through the two lateral segments of the C-profile, and with the second segment of the pallet placed under said profile and having a lateral extension that defines a support for the parts to be transported, while the end portion of the first segment projects above the C-section profile to be attached to the connecting rod, with the pallet capable of moving vertically with respect to the C-profile between an upper position and a lower position, while being pushed toward the upper position by a spring.

10. Support according to claims 8 and 9, **characterised in that** the bottom profile of the frame is attached to the vertical posts by two tubular profiles.
